# EUROPÄISCHE PATENTSCHRIFT

(11) **EP 2 220 348 B1**
(45) Veröffentlichungstag und Bekanntmachung des Hinweises auf die Patenterteilung: **15.04.2015**
(21) Anmeldenummer: 08865798.6
(22) Anmeldetag: 19.12.2008
(51) Int. Cl.: F01M 13/04, B01D 45/04, B01D 46/00, F01M 13/00

(54) **ÖLNEBELABSCHEIDER**
OIL MIST SEPARATOR
SÉPARATEUR DE BROUILLARD D'HUILE

(30) Priorität: 21.12.2007 DE 102007062098
(43) Veröffentlichungstag der Anmeldung: 25.08.2010
(73) Patentinhaber: Mahle International GmbH, 70376 Stuttgart (DE)
(72) Erfinder: RUPPEL, Stefan, 69126 Heidelberg-Emmertsgrund (DE); SAUTTER, Nic, 73207 Plochingen (DE); GOERLICH, Leszek, 71229 Leonberg (DE); HÜTTER, Ulrich, 73614 Schorndorf (DE); ÖZKAYA, Yakup, 70806 Kornwestheim (DE)
(74) Vertreter: BRP Renaud & Partner mbB Rechtsanwälte Patentanwälte Steuerberater
(86) Internationale Anmeldenummer: PCT/EP2008/068003
(87) Internationale Veröffentlichungsnummer: WO 2009/080747

(56) Entgegenhaltungen:
- EP-A- 1 275 828
- EP-A- 1 359 293
- WO-A-2009/025927
- DE-A1- 3 618 557
- DE-U1- 20 009 605
- JP-A- 2005 201 080
- JP-U- S61 159 611

## Beschreibung

Die vorliegende Erfindung betrifft einen Ölnebelabscheider für eine Kurbelgehäuseentlüftungseinrichtung.

Im Betrieb von Brennkraftmaschinen, die beispielsweise in Kraftfahrzeugen angeordnet sein können, gelangt über eine Leckage zwischen Kolben und Zylindern sogenanntes Blow-by-Gas in ein Kurbelgehäuse der jeweiligen Brennkraftmaschine. Um einen unzulässigen Überdruck im Kurbelgehäuse bzw. um eine Emission von Blow-by-Gas in die Umgebung zu vermeiden, kommen Kurbelgehäuseentlüftungseinrichtungen zum Einsatz. Üblicherweise verbindet eine derartige Entlüftungseinrichtung mit Hilfe einer Entlüftungsleitung das Kurbelgehäuse mit einem Frischgastrakt der Brennkraftmaschine. Im Frischgastrakt herrscht, insbesondere stromab einer Drosselklappe, ein relativer Unterdruck, der es ermöglicht, Blow-by-Gas aus dem Kurbelgehäuse anzusaugen. Im Kurbelgehäuse entsteht im Betrieb der Brennkraftmaschine ferner ein Ölnebel. Abgesaugtes Blow-by-Gas enthält somit Ölnebel. Um den Ölverbrauch der Brennkraftmaschine bzw. um die Schadstoffemissionen der Brennkraftmaschine zu reduzieren, weist eine Kurbelgehäuseentlüftungseinrichtung üblicherweise einen Ölnebelabscheider auf, der dazu dient, aus dem Blow-by-Gas, das aus dem Kurbelgehäuse abgesaugt wird, den darin mitgeführten Ölnebel abzuscheiden und einem entsprechenden Ölreservoir zuzuführen, bei dem es sich insbesondere um eine unten an das Kurbelgehäuse angebaute Ölwanne handeln kann.

Eine zunehmende Verschärfung von Schadstoffemissionsbestimmungen erfordert eine Verbesserung der Reinigungswirkung derartiger Ölnebelabscheider. Hinzu kommen sich teilweise widersprechende Anforderungen, wie z.B. eine möglichst lange wartungsfreie Lebenszeit für den Ölnebelabscheider, ein möglichst geringer Druckverlust, eine möglichst kompakte Bauform sowie ein möglichst hoher Abscheidegrad.

Aus der JP61-159611 U ist ein Ölnebelabscheider für eine Kurbelgehäuseentlüftungseinrichtung bekannt, der eine erste Abscheidereinheit und eine zweite Abscheidereinheit sowie ein Bypassventil aufweist.

Aus der EP 0 860 589 B1 ist ein Ölnebelabscheider für eine Kurbelgehäuseentlüftungseinrichtung bekannt, der eine erste Abscheidereinheit und eine zweite Abscheidereinheit sowie ein Bypassventil aufweist. Die erste Abscheidereinheit umfasst zumindest einen Filterkörper, der in einem Blow-by-Gaspfad so angeordnet ist, dass er vom Blow-by-Gas durchströmbar ist. Die zweite Abscheidereinheit ist in einem die erste Abscheidereinheit umgehenden Bypasspfad angeordnet, der vom Bypassventil geöffnet wird, sobald ein Differenzdruck an der ersten Abscheidereinheit einen vorbestimmten Wert übersteigt. Beim bekannten Ölnebelabscheider ist die zweite Abscheidereinheit durch einen Filterkörper gebildet.

Aus der JP 2005-201080 A ist ein weiterer Ölnebelabscheider dieser Art bekannt, bei dem die zweite Abscheidereinheit durch einen Filterkörper gebildet ist.

Aus der DE 36 18 557 A1 ist es bekannt, zur Kurbelgehäuseentlüftung zwei separate Ölnebelabscheider vorzusehen, die jeweils eine Abscheidereinheit aufweisen, von denen die eine durch einen Filterkörper gebildet ist, während die andere ein Labyrinth aufweist.

Weitere Ölnebelabscheider, die zwar einen mit Hilfe eines Bypassventils gesteuerten Bypasspfad zur Umgebung ihrer Abscheidereinheit aufweisen, bei denen jedoch keine zusätzliche Abscheidereinheit im Bypasspfad angeordnet ist, sind aus der DE 10 2006 051 143 A1, aus der DE 10 2005 038 257 A1, aus der DE 10 2004 061 938 B3, aus der DE 10 2004 055 065 A1, aus der DE 103 59 523 A1, aus der DE 102 32 044 A1, aus der DE 197 29 439 A1, aus der WO 01/92 690 A1 und aus der DE 203 02 220 U1 bekannt.

Die vorliegende Erfindung beschäftigt sich mit dem Problem, für einen Ölnebelabscheider der eingangs genannten Art eine verbesserte Ausführungsform anzugeben, die sich insbesondere dadurch auszeichnet, dass sie vergleichsweise preiswert herstellbar ist und vorzugsweise bei kompakter Bauweise eine vergleichsweise lange wartungsfreie Lebenszeit besitzt, einen akzeptablen Druckverlust bietet und einen relativ hohen Abscheidegrad realisiert.

Dieses Problem wird erfindungsgemäß durch die Gegenstände der unabhängigen Ansprüche gelöst. Vorteilhafte Ausführungsformen sind Gegenstand der abhängigen Ansprüche.

Bei der Erfindung ist die zweite Abscheideeinheit als Impactor ausgestaltet. Dies ist eine besondere Form eines Trägheitsabscheiders, der üblicherweise mit einer Prallwand oder Prallplatte arbeitet, gegen die die Blow-by-Gasströmung mit Hilfe entsprechender Strömungsleitmittel gelenkt wird, um eine Umlenkung der Strömung zu bewirken. Während das Gas durch Impulsumkehr einfach von der Prallplatte abprallt und in mehr oder weniger entgegengesetzter Richtung abströmt, bleiben flüssige Partikel an der Prallwand haften, können sich daran ansammeln und abfließen. Bei einer entsprechenden Strömungsgeschwindigkeit beim Aufprall auf die Prallplatte kann auch ein solcher Impactor ähnlich günstige Abscheidegrade wie ein Filterkörper aufweisen. Bei einem Impactor besteht die Gefahr einer Gegendruckerhöhung durch allmähliches Zusetzen an sich nicht. Um den gewünschten hohen Abscheidegrad zu erzielen, benötigt der Impactor jedoch eine vergleichsweise hohe Strömungsgeschwindigkeit, die in Regel durch eine Querschnittsverengung, insbesondere durch eine Düsenbildung, realisierbar ist, was jedoch mit einem entsprechenden Gegendruckanstieg einhergeht. Bei kleinen Differenzdrücken arbeitet ein solcher Impactor also nicht oder nur unzureichend. Beim erfindungsgemäßen Ölnebelabscheider kommt der Impactor, also die zweite Abscheidereinheit jedoch nur dann zum Einsatz, wenn bereits entsprechende große Differenzdrücke herrschen. Auf diese Weise vereinigt diese Ausführungsform des Ölnebelabscheiders die Vorzüge der beiden unterschiedlichen Abscheiderprinzipien und führt dabei zu einem erhöhten Gesamtwirkungsgrad des Ölnebelabscheiders. Während die mit dem Filterkörper arbeitende erste Abscheidereinheit bei einem kleinen Volumenstrom an Blow-by-Gas eine hohe Abscheiderate ermöglicht, kann die als Impactor ausgestaltete zweite Abscheideeinheit bei großen Volumenströmen ebenfalls eine hohe Abscheiderate erzielen.

Die Erfindung beruht hierbei auf dem allgemeinen Gedanken, den Ölnebelabscheider mit wenigstens zwei parallel angeordneten Abscheidereinheiten auszustatten, von denen die erste einen vom Blow-by-Gas durchströmbaren Filterkörper aufweist und von denen die zweite druckabhängig mittels eines Bypassventils aktivierbar oder zuschaltbar ist. Der vom Blow-by-Gas durchströmbare Filterkörper zeichnet sich durch einen sehr hohen Abscheidegrad aus, da er ohne weiteres so auslegbar ist, dass er für eine Gasströmung durchlässig ist, während er für mitgeführte feste oder flüssige Partikel bis hin zu sehr kleinen Kerndurchmessern quasi undurchlässig ist. Im Vergleich zu Trägheitsabscheidern, die lediglich durch eine Strömungsumlenkung Öltröpfchen und Festkörperpartikel aus der Blow-by-Gasströmung entfernen, erfasst ein derartiger Filterkörper auch kleinere bzw. leichtere Öltröpfchen und Festkörperpartikel. Allerdings besitzen Filterkörper zumindest im Hinblick auf einfache Trägheitsabscheider einen erhöhten Strömungswiderstand. Der Durchströmungswiderstand eines derartigen Filterkörpers erhöht sich mit zunehmender Beladung des jeweiligen Filtermaterials. Abgeschiedene Feststoffpartikel lagern sich im Filtermaterial ab. Abgeschiedene Flüssigkeitströpfchen können sich im Filtermaterial zunächst anlagern und bei hinreichender Benetzung aus dem Filtermaterial wieder abfließen. Hierbei kann abströmseitig auch eine Tropfenbildung erzielt werden, wobei die sich ausbildenden Tropfen ab einer bestimmten Tropfengröße abfließen der abtropfen. Im Betrieb des Ölnebelabscheiders kann sich somit der Durchströmungswiderstand des Filterkörpers erhöhen. Um einen unzulässig hohen Durchströmungswiderstand am Filterkörper zu vermeiden, der eine erforderliche Blow-by-Gasabsaugung aus dem Kurbelgehäuse gefährden würde, ist das Bypassventil vorgesehen, das bei Erreichen eines vorbestimmten Differenzdrucks an der ersten Abscheidereinheit einen Bypass öffnet, in dem die zweite Abscheidereinheit angeordnet ist. Diese zweite Abscheidereinheit ist durch ihre Anordnung im Bypass parallel zur ersten Abscheidereinheit angeordnet. Die aktivierte zweite Abscheidereinheit arbeitet somit zusätzlich zur ersten Abscheidereinheit, wobei die Aufteilung des Blow-by-Gases auf die beiden Abscheidereinheiten von dem an der ersten Abscheidereinheit anliegenden Differenzdruck abhängt. Je größer dieser Differenzdruck ist, desto größer ist der Anteil an Blow-by-Gas, der durch den Bypasspfad und durch die zweite Abscheidereinheit strömt.

Durch die parallel geschaltete und druckabhängig aktivierbare zweite Abscheidereinheit kann sichergestellt werden, dass auch bei einem zugesetzten Filterkörper der ersten Abscheidereinheit oder allgemein bei einem am Ölnebelabscheider anliegenden großen Differenzdruck eine hinreichende Blow-by-Gasmenge durch den Ölnebelabscheider strömen kann. Somit kann eine für eine funktionssichere Entlüftung des Kurbelgehäuses erforderliche Blow-by-Gasmenge zumindest in den relevanten Betriebsbereichen der Brennkraftmaschine abgesaugt werden.

Entsprechend einer besonders vorteilhaften Ausführungsform kann außerdem eine dritte Abscheidereinheit vorgesehen sein, die im Blow-by-Gaspfad stromauf der beiden anderen Abscheidereinheiten angeordnet ist. Mit Hilfe dieser dritten Abscheidereinheit kann eine Vorabscheidung realisiert werden, beispielsweise um vergleichsweise große Öltröpfchen abfangen zu können, bevor diese zum Filterkörper der ersten Abscheidereinheit gelangen. Hierdurch kann effektiv eine frühzeitige Verunreinigung des Filterkörpers vermieden werden.

Die dritte Abscheidereinheit kann entsprechend einer vorteilhaften Ausführungsform eine Düsenplatte aufweisen. Eine derartige Düsenplatte besitzt einen Plattenkörper, der mehrere parallel durchströmbare und in Strömungsrichtung konvergierende Düsenöffnungen enthält. In den Düsenöffnungen wird die Blow-by-Gasströmung beschleunigt und in Richtung der Austrittsquerschnitte der Düsenöffnungen umgelenkt. Hierdurch können größere Tröpfchen an den konvergierenden Wänden der Düsenöffnungen auftreffen und zur Anströmseite der Düsenplatte abfließen.

Vorteilhaft ist eine Weiterbildung, bei welcher die dritte Abscheidereinheit einen Vlieskörper aufweist, der entweder unmittelbar an der Abströmseite der Düsenplatte oder dazu beabstandet angeordnet ist. Die in der beschleunigten Düsenströmung mitgeführten Öltröpfchen treffen auf den Vlieskörper auf und können dadurch abgeschieden werden.

Eine weitere vorteilhafte Ausführungsform charakterisiert sich dadurch, dass der Impactor eine Prallwand aufweist, die durch ein Ventilglied des Bypassventils gebildet ist. Hierdurch erhält das Ventilglied eine Doppelfunktion. Denkbar ist als Ventilglied beispielsweise eine verschwenkbar angeordnete Klappe.

Gemäß einer anderen vorteilhaften Ausführungsform können der Impactor und das Bypassventil eine bauliche Einheit bilden, die vormontiert ist und die im vormontierten Zustand in den Ölnebelabscheider eingesetzt werden kann. Hierdurch vereinfacht sich der Zusammenbau des Ölnebelabscheiders.

Darüber hinaus kann der Ölnebelabscheider einen Tragrahmen aufweisen, der zur Aufnahme der Abscheidereinrichtungen sowie des Bypassventils ausgestaltet ist. Auch hierdurch kann der Zusammenbau des Ölnebelabscheiders vereinfacht werden. Der Tragrahmen kann optional weitere Komponenten beinhalten. Beispielsweise kann ein Abschnitt einer Frischluftleitung in den Tragrahmen integriert sein. Ferner kann der Tragrahmen einen von der ersten Abscheidereinrichtung und von der zweiten Abscheidereinrichtung zum Frischluftpfad führenden Abschnitt des Blow-by-Gaspfads enthalten. Außerdem kann der Tragrahmen ein Druckregelventil enthalten. Des Weiteren kann der Tragrahmen einen mit einem Kurbelgehäuse einer Brennkraftmaschine kommunizierend verbindbaren Blow-by-Gaspfad-Einlass aufweisen und einen von diesem Einlass zu den Abscheidereinheiten führenden Abschnitt des Blow-by-Gaspfads enthalten.

Besonders vorteilhaft ist eine Ausführungsform, bei welcher der Tragrahmen als Zylinderkopfhaube eines Zylinderkopfs einer Brennkraftmaschine ausgestaltet ist. Er bildet dadurch eine hochintegrierte Einheit, die raumsparend montiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine teilweise geschnittene perspektivische Ansicht von oben auf einen Ölnebelabscheider,
- Fig. 2: eine perspektivische Ansicht von unten auf den Ölnebelabscheider.

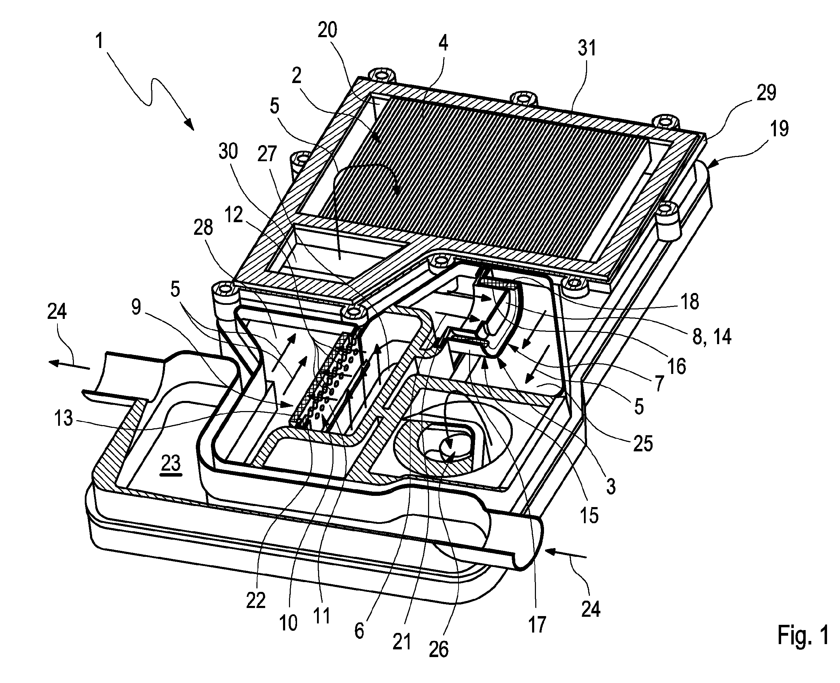

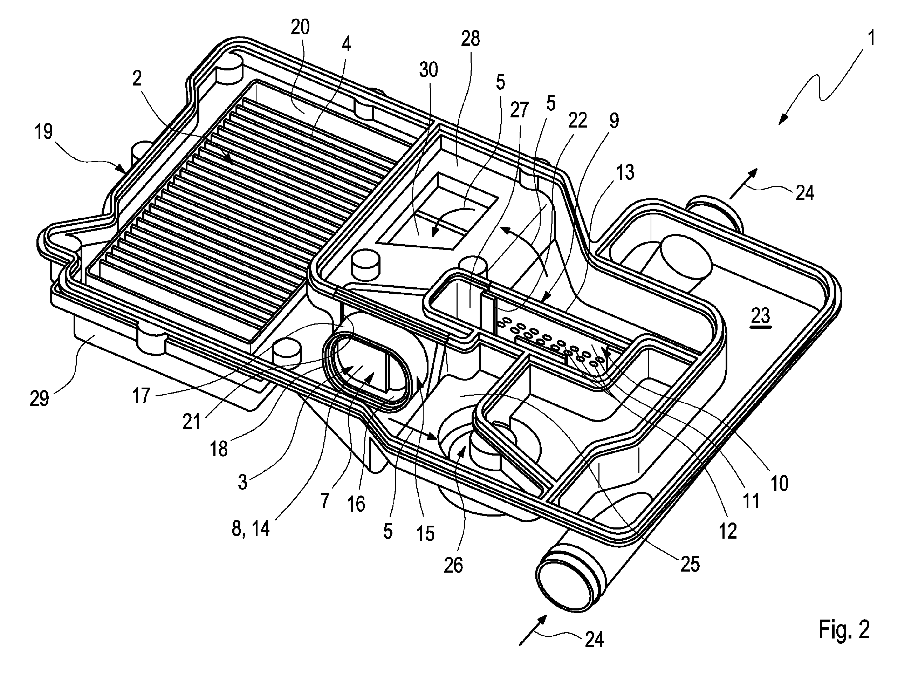

Entsprechend den Fig. 1 und 2 umfasst ein Ölnebelabscheider 1, der in einer Kurbelgehäuseentlüftungseinrichtung für eine Brennkraftmaschine zum Einsatz kommen kann, eine erste Abscheidereinheit 2 und eine zweite Abscheidereinheit 3 auf. Die erste Abscheidereinheit 2 weist zumindest einen Filterkörper 4 auf, der im Beispiel als flacher Faltenbalgfilter ausgestaltet ist. Der Filterkörper 4 ist in einem Blow-by-Gaspfad 5 angeordnet, und zwar so, dass er vom Blow-by-Gas durchströmbar ist. Im Unterschied dazu ist die zweite Abscheidereinheit 3 in einem Bypasspfad 6 angeordnet, der die erste Abscheidereinheit 2 umgeht. Ferner umfasst der Ölnebelabscheider 1 ein Bypassventil 7, das so angeordnet ist, dass es den Bypasspfad 6 öffnet, wenn ein in der ersten Abscheidereinheit 2 anliegender Differenzdruck einen vorbestimmten Wert erreicht bzw. übersteigt. Die zweite Abscheidereinheit 3 ist dabei als Impactor ausgestaltet und arbeitet dementsprechend mit einer Prallwand 8, gegen die die Blow-by-Gasströmung geleitet wird, so dass die mitgeführten Partikel, insbesondere Öltröpfchen, an der Prall-platte 8 auftreffen, sich daran ansammeln und daran ablaufen können.

Der hier vorgestellte Ölnebelabscheider 1 umfasst außerdem eine dritte Abscheidereinheit 9. Diese ist bezüglich der beiden anderen Abscheidereinheiten 2, 3 als Vorabscheider ausgestaltet und dementsprechend stromauf der beiden anderen Abscheidereinheiten 2, 3 angeordnet. Somit befindet sich die dritte Abscheidereinheit 9 im Blow-by-Gaspfad stromauf der Abscheidereinheit 2 und stromab einer Abzweigstelle, bei welcher der Bypasspfad 6 vom Blow-by-Gaspfad 5 abzweigt.

Diese dritte Abscheidereinheit 9 kann eine Düsenplatte 10 aufweisen. Diese besitzt einen Plattenkörper 11, der mehrere Düsenöffnungen 12 enthält. Die Düsenöffnungen 12 durchsetzen den Plattenkörper 11. Sie sind dabei parallel durchströmbar und können insbesondere so geformt sein, dass sie in der Durchströmungsrichtung konvergieren. In der gezeigten Ausführungsform ist die dritte Abscheidereinheit 9 außerdem mit einem Vlieskörper 13 ausgestattet, der im Beispiel beabstandet zur Abströmseite der Düsenplatte 10 angeordnet ist. Ebenso ist es grundsätzlich möglich, den Vlieskörper 13 unmittelbar an der Abströmseite der Düsenplatte 10 anzuordnen. Jedenfalls ist der Vlieskörper 13 so positioniert, dass er von der Blow-by-Gasströmung, welche die Düsenöffnungen 12 durchdringt, angeströmt und insbesondere auch durchströmt wird. Die Filterwirkung dieses Vlieskörpers 13 ist dabei deutlich kleiner, also grober, als die Filterwirkung des Filterkörpers 4 der ersten Abscheidereinheit 2.

Die Prallwand 8 des Impactors, also der zweiten Abscheidereinheit 3 kann durch ein Ventilglied 14 des Bypassventils 7 gebildet sein. Das Ventilglied 14 ist im gezeigten Beispiel eine Klappe, die randseitig um eine hier nicht eingetragene Schwenkachse verschwenken kann, die sich senkrecht zur Strömungsrichtung der Bypassströmung erstreckt. Das klappenartige Ventilglied 14 kann dabei mittels einer hier nicht gezeigten Feder in seine Schließstellung vorgespannt sein. Sobald der Druck an der Anströmseite des Ventilglieds 14 den zuvor genannten vorbestimmten Wert des maximal tolerierbaren Differenzdrucks erreicht, wird die entsprechend dimensionierte Vorspannkraft der Feder überwunden, so dass das Ventilglied 14 öffnen kann. In der sich dann ausbildenden Blow-by-Gasströmung trifft das Blow-by-Gas gegen das Ventilglied 14, wodurch es als Prallwand dient bzw. die Prallwand 8 des Impactors bildet. Mitgeführte Flüssigkeitströpfchen treffen auf die Prallwand 8 auf, sammeln sich daran und können daran abfließen.

Im gezeigten, bevorzugten Beispiel bilden der Impactor, also die zweite Abscheidereinheit 3 und das Bypassventil 7 eine bauliche Einheit 15. Diese Einheit 15 oder Baugruppe 15 ist vormontierbar und kann im vormontierten Zustand in den Ölnebelabscheider 1 eingesetzt werden. Im Beispiel weist diese Einheit 15 ein Innenrohr 16 und ein Außenrohr 17 auf, die zueinander koaxial angeordnet sind.

Das Ventilglied 14 bzw. die Prallplatte 8 ist an einer Austrittsseite des Innenrohrs 16 angeordnet. Das Außenrohr 17 umschließt das Innenrohr 16 unter Ausbildung eines Ringraums, in dem ein Vlieskörper 18 angeordnet ist. Ferner überragt das Außenrohr 17 das Innenrohr 16 in axialer Richtung, und zwar austrittsseitig. Bei kleinen Öffnungswinkeln des klappenförmigen Ventilglieds 14 erzwingt das Ventilglied 14 bzw. die Prallwand 8 eine Strömungsumlenkung gegen eine dem Innenrohr 16 zugewandte Innenseite des Außenrohrs 17. An dieser Innenseite ist jedoch der Vlieskörper 18 angeordnet. Bei diesen kleinen Öffnungswinkeln dient somit die Innenseite des Außenrohrs 17 bzw. der daran angeordnete Vlieskörper 18 ebenfalls als Prallwand. Mitgeführte Flüssigkeitströpfchen werden vom Vlieskörper 18 aufgenommen und abgeführt.

Der hier gezeigte Ölnebelabscheider 1 zeichnet sich außerdem durch einen Tragrahmen 19 aus. Dieser ist so gestaltet, dass er die Abscheidereinheiten 2, 3, 9 und das Bypassventil 7 aufnehmen kann. Beispielsweise enthält der Tragrahmen 19 eine Aufnahme 20 für den Filterkörper 4 der ersten Abscheidereinheit 2. Ferner weist er im Beispiel eine Aufnahme 21 für die Impactor-Ventil-Einheit 15 auf. Außerdem ist hier eine Aufnahme 22 vorgesehen, in welche die Düsenplatte 10 eingesetzt werden kann.

Im Beispiel ist in dem Tragrahmen 19 außerdem ein Abschnitt 23 einer durch Pfeile angedeuteten Frischluftleitung integriert. Der Tragrahmen 19 ist insbesondere aus Kunststoff durch Spritzformen hergestellt. Der besagte Frischluftleitungsabschnitt 23 kann dann integral daran ausgeformt sein.

Ferner enthält der Tragrahmen 19 hier einen von der ersten Abscheidereinheit 2 und von der zweiten Abscheidereinheit 3 zum Frischluftpfad führenden Abschnitt 25 des Blow-by-Gaspfads 5. Der Anschluss an den Frischluftpfad erfolgt hier zweckmäßig in dem in den Tragrahmen 19 integrierten Abschnitt 23 der Frischluftleitung 24. Der Tragrahmen 19 kann außerdem ein Druckregelventil 26 enthalten, mit dessen Hilfe die Blow-by-Gasmenge gesteuert wird. Besagtes Druckregelventil 26 steuert insbesondere die kommunizierende Verbindung zwischen dem genannten Abschnitt 25 des Blow-by-Gaspfads 5 und dem genannten Abschnitt 23 der Frischluftleitung 24.

Der Tragrahmen 19 besitzt im Beispiel außerdem einen Einlass 27, der im montierten Zustand des Ölnebelabscheiders 1 mit dem Kurbelgehäuse der jeweiligen Brennkraftmaschine kommunizierend verbunden ist. Außerdem enthält der Tragrahmen 19 einen von dem genannten Einlass 27 zu den Abscheidereinheiten 2, 3, 9 führenden Abschnitt 28 des Blow-by-Gaspfads 5.

Insgesamt repräsentiert der Tragrahmen 19 somit ein hochintegriertes Bauteil, das zum einen mehrere Komponenten des Ölnebelabscheiders 1 aufnimmt und das komplexe Gasführungsfunktionen übernimmt.

Ferner kann der Tragrahmen 19 einen Deckel 29 aufweisen. Besagter Deckel 29 verschließt den Tragrahmen 19 zumindest in einem Bereich, in dem der Filterkörper 4 angeordnet ist. Bei entferntem Deckel 29 kann somit ohne weiteres der Filterkörper 4 ausgetauscht werden. Im gezeigten, bevorzugten Beispiel ist der Deckel 29 außerdem so ausgestaltet, dass er einen zur ersten Abscheidereinheit 2 bzw. zum Filterkörper 4 führenden Abschnitt 30 des Blow-by-Gaspfads 5 enthält. Somit erhält auch der Deckel 29 eine Doppelfunktion. Zur gasdichten und druckdichten Verbindung zwischen Deckel 29 und Tragrahmen 19 kann eine Dichtung 31 vorgesehen sein, die im Beispiel axial wirkt und beim Anschrauben des Deckels 29 axial verspannt wird.

Bevorzugt ist der Tragrahmen 19 als Zylinderkopfhaube ausgestaltet, mit deren Hilfe ein Zylinderkopf einer Brennkraftmaschine verschlossen bzw. abgedeckt werden kann. Hierdurch ergibt sich für die Brennkraftmaschine insgesamt eine besonders kompakte Bauform. Grundsätzlich ist es ebenso möglich, den Tragrahmen 19 innerhalb einer Zylinderkopfhaube als separates Bauteil anzuordnen.

## Patentansprüche

1. Ölnebelabscheider für eine Kurbelgehäuseentlüftungseinrichtung,
- mit einer ersten Abscheidereinheit (2), die zumindest einen Filterkörper (4) aufweist, der in einem Blow-by-Gaspfad (5) so angeordnet ist, dass er vom Blow-by-Gas durchströmbar ist,
- mit einer als Impactor ausgestalteten zweiten Abscheidereinheit (3), die in einem die erste Abscheidereinheit (2) umgehenden Bypasspfad (6) angeordnet ist,
- mit einem Bypassventil (7), das den Bypasspfad (6) öffnet, sobald ein Differenzdruck an der ersten Abscheidereinheit (2) einen vorbestimmten Wert übersteigt,
**dadurch gekennzeichnet,**
- **dass** der Impactor und das Bypassventil (7) eine bauliche Einheit (15) bilden, die vormontierbar ist und vormontiert in den Ölnebelabscheider (1) einsetzbar ist, und
- **dass** die Impactor-Ventil-Einheit (15) ein Innenrohr (16) und ein dazu koaxiales Außenrohr (17) aufweist, wobei am Innenrohr (16) austrittsseitig das Ventilglied (7) verstellbar angeordnet ist, während das Außenrohr (17) an einer dem Innenrohr (16) zugewandten Innenseite einen Vlieskörper (18) aufweist.

2. Ölnebelabscheider nach Anspruch 1,
**dadurch gekennzeichnet,**
**dass** eine dritte Abscheidereinheit (9) vorgesehen ist, die im Blow-by-Gaspfad (5) stromauf der beiden anderen Abscheidereinheiten (2, 3) angeordnet ist.

3. Ölnebelabscheider nach Anspruch 2,
**dadurch gekennzeichnet,**
**dass** die dritte Abscheidereinheit (9) eine Düsenplatte (10) aufweist, die in einem Plattenkörper (11) mehrere parallel durchströmbare Düsenöffnungen (12) enthält, die insbesondere in Strömungsrichtung konvergieren können.

4. Ölnebelabscheider nach Anspruch 3,
**dadurch gekennzeichnet,**
**dass** die dritte Abscheidereinheit (9) einen Vlieskörper (13) aufweist, der an der Abströmseite der Düsenplatte (10) oder dazu beabstandet angeordnet ist.

5. Ölnebelabscheider nach einem der Ansprüche 1 bis 4,
**dadurch gekennzeichnet,**
**dass** der Impactor eine Prallwand (8) aufweist, die durch ein Ventilglied (14) des Bypassventils (7) gebildet ist.

6. Ölnebelabscheider nach einem der Ansprüche 1 bis 5,
**dadurch gekennzeichnet,**
**dass** ein Tragrahmen (19) zur Aufnahme der zumindest zwei Abscheidereinrichtungen (2, 3, 9) und des Bypassventils (7) vorgesehen ist.

7. Ölnebelabscheider nach Anspruch 6,
**dadurch gekennzeichnet,**
**dass** in dem Tragrahmen (19) ein Abschnitt (23) einer Frischluftleitung (24) integriert ist.

8. Ölnebelabscheider nach Anspruch 6 oder 7,
**dadurch gekennzeichnet,**
**dass** der Tragrahmen (19) einen von der ersten Abscheidereinheit (2) und von der zweiten Abscheidereinheit (3) zum Frischluftpfad führender Abschnitt (25) des Blow-by-Gaspfads (5) enthält.

9. Ölnebelabscheider nach einem der Ansprüche 6 bis 8,
**dadurch gekennzeichnet,**
**dass** der Tragrahmen (19) ein Druckregelventil (26) enthält.

10. Ölnebelabscheider nach einem der Ansprüche 6 bis 9,
**dadurch gekennzeichnet,**
**dass** der Tragrahmen (19) einen mit einem Kurbelgehäuse kommunizierend verbindbaren Blow-by-Gas-Einlass (27) aufweist und einen vom Einlass (27) zu den Abscheidereinheiten (2, 3, 9) führenden Abschnitt (28) des Blow-by-Gaspfads (5) enthält.

11. Ölnebelabscheider nach einem der Ansprüche 6 bis 10,
**dadurch gekennzeichnet,**
**dass** der Tragrahmen (19) einen Deckel (29) aufweist, der einen zur ersten Abscheidereinheit (2) führenden Abschnitt (30) des Blow-by-Gaspfads (5) enthält.

12. Ölnebelabscheider nach einem der Ansprüche 6 bis 11,
**dadurch gekennzeichnet,**
**dass** der Tragrahmen (19) als Zylinderkopfhaube eines Zylinderkopfs einer Brennkraftmaschine ausgestaltet ist.

## Claims

1. An oil mist separator for a positive crankcase ventilation system,
- with a first separator unit (2) which has at least one filter body (4) arranged in a blow-by gas path (5) in such a manner that blow-by gas can flow through the filter body (4),
- with a second separator unit (3) which is designed as an impactor separator and is arranged in a bypass path (6) that bypasses the first separator unit (2),
- with a bypass valve (7) which opens the bypass path (6) when a differential pressure in the first separator unit (2) exceeds a predefined value,
**characterized in**
**that** the impactor separator and the bypass valve (7) form a structural unit (15) which can be pre-assembled and can be inserted in the pre-assembled state into the oil mist separator (1), and
**that** the impactor-valve unit (15) has an inner tube (16) and an outer tube (17) arranged coaxially thereto, wherein the valve element (7) is adjustably arranged on the outlet side of the inner tube (16), whereas the outer tube (17) has a fleece body (18) arranged on a inner side facing the inner tube (16).

2. The oil mist separator according to claim 1,
**characterized in**
**that** a third separator unit (9) is provided which is arranged in the blow-by gas path (5) upstream of the two other separator units (2, 3).

3. The oil mist separator according to claim 2,
**characterized in**
**that** the third separator unit (9) has a nozzle plate (10) which contains in a plate body (11) a plurality of nozzle openings (12) through which a parallel flow can pass and which can converge in particular in flow direction.

4. The oil mist separator according to claim 3,
**characterized in**
**that** the third separator unit (9) comprises a fleece body (13) which is arranged on the outflow side of the nozzle plate (10) or spaced apart thereto.

5. The oil mist separator according to any one of the claims 1 to 4,
**characterized in**
**that** the impactor separator has an impact wall (8) which is formed by a valve element (14) of the bypass valve (7).

6. The oil mist separator according to any one of the claims 1 to 5,
**characterized in**
**that** a support frame (19) is provided for receiving the at least two separator devices (2, 3, 9) and the bypass valve (7).

7. The oil mist separator according to claim 6,
**characterized in**
**that** a section (23) of a fresh air line (24) is integrated in the support frame (19).

8. The oil mist separator according to claim 6 or 7,
**characterized in**
**that** the support frame (19) contains a section (25) of the blow-by gas path (5), which section runs from the first separator unit (2) and from the second separator unit (3) to the fresh air path.

9. The oil mist separator according to any one of the claims 6 to 8,
**characterized in**
**that** the support frame (19) contains a pressure control valve (26).

10. The oil mist separator according to any one of the claims 6 to 9,
**characterized in**
**that** the support frame (19) has a blow-by gas inlet (27) which can be connected to the crankcase in a communicating manner and that the support frame contains a section (28) of the blow-by gas path (5), which section runs from the inlet (27) to the separator units (2, 3, 9).

11. The oil mist separator according to any one of the claims 6 to 10,
**characterized in**
**that** the support frame (19) has a cover (29) which contains a section (30) of the blow-by gas path (5), which section runs to the first separator unit (2).

12. The oil mist separator according to any one of the claims 6 to 11,
**characterized in**
**that** the support frame (19) is designed as cylinder head cover of a cylinder head of an internal combustion engine.

## Revendications

1. Séparateur de brouillard d'huile pour un dispositif de purge d'un carter de vilebrequin, comprenant :
- une première unité séparatrice (2), qui présente au moins un corps filtrant (4), ce dernier étant aménagé dans un trajet de gaz de soufflage (5) de sorte qu'il puisse être traversé par ledit gaz de soufflage,
- une deuxième unité séparatrice (3) conçue sous forme d'impacteur et qui est aménagée dans un trajet de dérivation (6) contournant la première unité séparatrice (2),
- une soupape de dérivation (7) qui ouvre le trajet de dérivation aussitôt qu'une pression différentielle sur la première unité séparatrice (2) dépasse une valeur prédéterminée,
**caractérisé en ce que** :
- l'impacteur et la soupape de dérivation (7) forment une unité structurelle (15) qui peut être préassemblée et utilisée pré-assemblée dans le séparateur de brouillard d'huile (1) et
- l'unité d'impacteur et de soupape (15) présente un tube interne (16) et un tube externe (17) coaxial à ce dernier, dans lequel l'élément de soupape (7) est aménagé côté sortie sur le tube interne (16) en étant mobile, alors que le tube externe (17) présente un corps en non-tissé (18) sur un côté interne tourné vers le tube interne (16).

2. Séparateur de brouillard d'huile selon la revendication 1,
**caractérisé en ce que** :
il est prévu une troisième unité séparatrice (9) qui est aménagée dans le trajet de gaz de soufflage en amont des deux autres unités séparatrices (2, 3).

3. Séparateur de brouillard d'huile selon la revendication 2,
**caractérisé en ce que** :
la troisième unité séparatrice (9) présente une plaque à buses (10) qui contient plusieurs ouvertures de buses (12) dans un corps de plaque (11), lesdites buses pouvant être traversées en parallèle et qui peuvent converger en particulier dans la direction d'écoulement.

4. Séparateur de brouillard d'huile selon la revendication 3,
**caractérisé en ce que** :
la troisième unité séparatrice (9) présente un corps en non-tissé (13) qui est aménagé du côté de décharge de la plaque à buses (10) ou à distance de celle-ci.

5. Séparateur de brouillard d'huile selon l'une quelconque des revendications 1 à 4,
**caractérisé en ce que** :
l'impacteur présente une paroi de rebondissement (8) qui est formée par un élément (14) de la soupape de dérivation (7).

6. Séparateur de brouillard d'huile selon l'une quelconque des revendications 1 à 5,
**caractérisé en ce que** :
un cadre de support (19) est prévu pour recevoir les au moins deux dispositifs séparateurs (2, 3, 9) et la soupape de dérivation (7).

7. Séparateur de brouillard d'huile selon la revendication 6,
**caractérisé en ce que** :
une section (23) d'une conduite d'air frais (24) est intégrée au cadre de support (19).

8. Séparateur de brouillard d'huile selon la revendication 6 ou la revendication 7,
**caractérisé en ce que** :
le cadre de support (19) contient une section (25) du trajet de gaz de soufflage (5) menant au trajet d'air frais et partant de la première unité séparatrice (2) et de la deuxième unité séparatrice (3).

9. Séparateur de brouillard d'huile selon l'une quelconque des revendications 6 à 8,
**caractérisé en ce que** :
le cadre de support (19) contient une soupape de réglage de pression (26).

10. Séparateur de brouillard d'huile selon l'une quelconque des revendications 6 à 9,
**caractérisé en ce que** :
le cadre de support (19) présente d'une part une admission de gaz de soufflage (27) pouvant communiquer avec un carter de vilebrequin et contient d'autre part une section (28) du trajet de gaz de soufflage (5) allant de l'admission (27) aux unités séparatrices (2, 3, 9).

11. Séparateur de brouillard d'huile selon l'une quelconque des revendications 6 à 10,
**caractérisé en ce que** :
le cadre de support (19) présente un couvercle (29) qui contient une section (30) du trajet de gaz de soufflage (5) menant à la première unité séparatrice (2).

12. Séparateur de brouillard d'huile selon l'une quelconque des revendications 6 à 11,
**caractérisé en ce que** :
le cadre de support (19) se présente sous la forme d'un couvercle supérieur de soupapes d'une tête de cylindre d'un moteur à combustion interne.
